# EUROPEAN PATENT SPECIFICATION

(11) **EP 3 296 550 B1**
(45) Date of publication and mention of the grant of the patent: **11.09.2019**
(21) Application number: 16465537.5
(22) Date of filing: 19.09.2016
(51) Int. Cl.: F02D 41/40, F02D 41/00

(54) **METHOD OF OPERATING A MULTI-PULSE INJECTION SYSTEM**
VERFAHREN ZUM BETRIEB EINES MEHRFACHIMPULSINJEKTIONSSYSTEMS
PROCÉDÉ DE FONCTIONNEMENT D'UN SYSTÈME D'INJECTION À MULTI-IMPULSION

(43) Date of publication of application: 21.03.2018
(73) Proprietor: Continental Automotive GmbH, 30165 Hannover (DE)
(72) Inventor: Ioanas, Gelu, 300109 Timisoara (RO)

(56) References cited:
- FR-A1- 3 030 632
- GB-A- 2 525 604
- US-A1- 2007 056 563
- US-A1- 2009 063 013
- US-A1- 2009 222 195
- US-A1- 2009 234 558
- US-A1- 2010 318 275
- US-A1- 2012 035 833
- US-A1- 2012 130 620
- US-A1- 2015 088 403
- Hannu Jääskeläinen ET AL: "Common Rail Fuel Injection", DieselNet, 1 May 2015 (2015-05-01), XP055352640, Retrieved from the Internet: URL:https://www.dieselnet.com/tech/diesel_ fi_common-rail.php [retrieved on 2017-03-08]

## Description

The present invention is directed to a method of operating an injection system of a motor vehicle.

According to such an injection system several injection pulses are generated within an injection window. For determining the correct injection of fuel the angular start of injection (SOI) and the injection pulse timing (TI) have to be calculated. According to the existing systems these values are calculated without considering the hydraulic influences on the following injections for the requested configuration. After calculation of injection pulse timings (TI), corresponding corrections are applied to the initially calculated injection angles. In case of conflict for the pulses positioning - conflicts between the several injections within the injection window -, a collision management (CM) rule based mechanism decides upon the necessary actions, namely shift pulses, remove pulses etc.

The injection systems for combustion engines work with a multitude of injection pulse configurations, at various SOIs, which need to be realized by considering the systems hydraulic and electrical constraints. Often, the requested injection pulses overlap and they need to be redistributed. Unfortunately, the redistribution of hydraulic injection pulses leads to a change in the hydraulic behaviour of the system which further could change the fuel pressure for following injections, requiring a recalculation of TIs. However, this recalculation is not realized in the current state of the art.

From US 2012/0130620 A1 a method is known for estimating an instantaneous pressure value in a fuel line of a fuel injection system during a fuel multi-injection pattern. According to this method a mean pressure value inside the fuel line of the fuel injection system is determined and this mean pressure value is corrected with pressure contributions generated by the previous injections of the fuel multi-injection pattern. Furthermore, an internal combustion engine is described comprising an electronic control unit which is configured to carry out such a method. In addition, US 2015/088403 A1, XP055352640, US 2010/318275 A1, US 2007/056563 A1 and US 2012/035833 A1 all consider the influence of a distance between two injections on the injection amount of the second injection due to pressure waves influence of the first injection.

FR3030632 A1 considers the problem of conflicts between injections pulses within an injection window.

It is the object of the present invention to provide a method of operating an injection system which is characterized by an especially high exactness.

According to the invention this object is attained by a method of operating an injection system of a motor vehicle comprising the features of claim 1.

Accordingly, if there are conflicts between the several injection pulses within the injection window when corrections are carried out by the collision management rule based mechanism, an evaluation is carried out with respect to the applied corrections if the corrections cause pressure wave influences upon following injection pulses. If such pressure wave influences exist, the injection durations are recalculated on the basis of this evaluation in order for the injection system to deliver the requested fuel mass.

The carried out evaluation consists of comparing the corrections with a minimal threshold above which a carried out correction has a hydraulic conflict on following injection pulses. According to the invention the impacted injection durations (TI) are recalculated if the result of the comparison lies above the threshold.

Accordingly, the method is characterized by comparing the corrections with a minimal threshold above which the start (SOI) of injection position change has a hydraulic influence on following injection pulses.

Thus, the inventive method allows an especially high exactness with respect to the operation of an injection system.

So, the invention provides a method to manage collisions for injection pulses which gives the possibility to recalculate the injection pulses durations at each step using pressure wave corrections. These pressure wave corrections are calculated on the basis of already redistributed predecessor start of injection angles.

The recalculation of the duration (TI) is preferably based on an iterative calculation method.

According to an embodiment of the invention the electrical injection pulse durations are calculated from the determined hydraulic injection pulse durations (TI).

As regards the corrections regarding the angular start of injection (SOI), the same are preferably carried out to satisfy the constraints regarding minimum hydraulic separation (distance) between injection pulses and fitting of the injection pulses inside the injection window.

The several injection pulses can be pulses of at least one pilot injection, main injection and/or post injection.

The present invention is also directed to an injection system of a motor vehicle comprising a control unit configured to carry out the method according to one of the preceding claims.

In the following the invention is described by means of examples in connection with the drawing:
- Figure 1: shows a flow chart of the inventive method;
- Figure 2: shows a first scenario with regard to the realization of the inventive method;
- Figure 3: shows a second scenario with regard to the realization of the inventive method;
- Figure 4: shows a third scenario with regard to the realization of the inventive method; and
- Figure 5: shows a fourth scenario with regard to the realization of the inventive method.

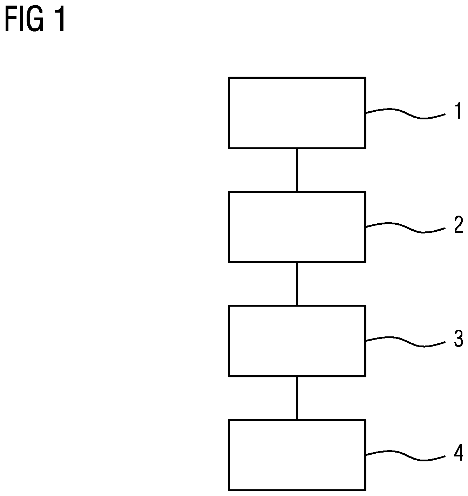

An embodiment of a method of operating an injection system of a motor vehicle is shown in figure 1 by means of a flow chart. In a first step 1 the angular start (SOI) and duration (TI) of several injection pulses within an injection window are determined. The several injection pulses within an injection window comprise one or more pilot injections, one or more main injections and/or one or more post injections.

In a second step angular start (SOI) corrections to the determined values (SOI, TI) from step 1 are carried out by a collision management (CM) rule based mechanism if there are conflicts between the several injection pulses. These corrections comprise the shifting and/or removing of pulses.

By doing this the applied corrections for each start of an injection pulse are evaluated every step (shown at step 3). The evaluation is carried out with respect to pressure wave influences upon following injection pulses within the injection window.

In a fourth step the recalculated angular start (SOI) and timing (TI) are evaluated on the basis of minimum hydraulic separation (distance) between injection pulses and fitting of the injection pulses inside the injection window. In case that the above mentioned constraints are not respected, the loop is restarted from step 2.

The carried out evaluation (step 3) consists of comparing the corrections with a minimal threshold above which a carried out correction has a hydraulic influence on following injection pulses. If the result of the comparison lies above the threshold, the following injection durations are recalculated using the new pressure wave information.

As regards the corrections carried out at step 2 the same are carried out to satisfy the constraints regarding minimum hydraulic separation (distance) between injection pulses and fitting of the injection pulses inside the injection window.

The following algorithm with respect to the above-described method is described. The used terms have the following meanings:
- TI: - injection pulse duration
- SOI: - angular start of injection
- P: - pressure wave compensation
- CM: - collision management

1. Calculate intermediate hydraulic Tis for all active injections. Initialization: k = 1
2. Calculate pressure wave compensations Pₖ₋₁ for all injections using initial SOIₖ₋₁ and TIₖ₋₁
3. Recalculate new hydraulic TIs for all active injections using new pressure compensation => TIₖ
4. For *i* = *1...n* Do
   Evaluate with hydraulic CM the requested hydraulic SOIs using intermediate TIₖ => new hydraulic SOIs (to calculate correction SOIₖ - SOIₖ₋₁)
   If |SOIₖ(i) - SOIₖ₋₁(i)|> minimum threshold, then:
   > For injection *i* calculate pressure wave compensations Pₖ(i) from previous active injections using SOIₖ, and TIₖ
   > Recalculate hydraulic TI (TIₖ₊₁(i)) for injection i using new pressure compensation
   > Calculate pressure wave compensations for all active following injections (*j* = *i*+*1,...,n*) using new SOIₖ(i) and TIₖ(i) => Pₖ(j)
   > For *j* = *i*+*1... n* if |Pₖ(j)-Pₖ₋₁(j)|> minimum threshold, then:
   > Recalculate hydraulic TI (TIₖ₊₁ (j)) for injection j using new pressure compensation
   > End loop
   > Iterate k
   End loop
5. Evaluate with electrical CM the requested electrical SOIs using the calculated electrical TIs.

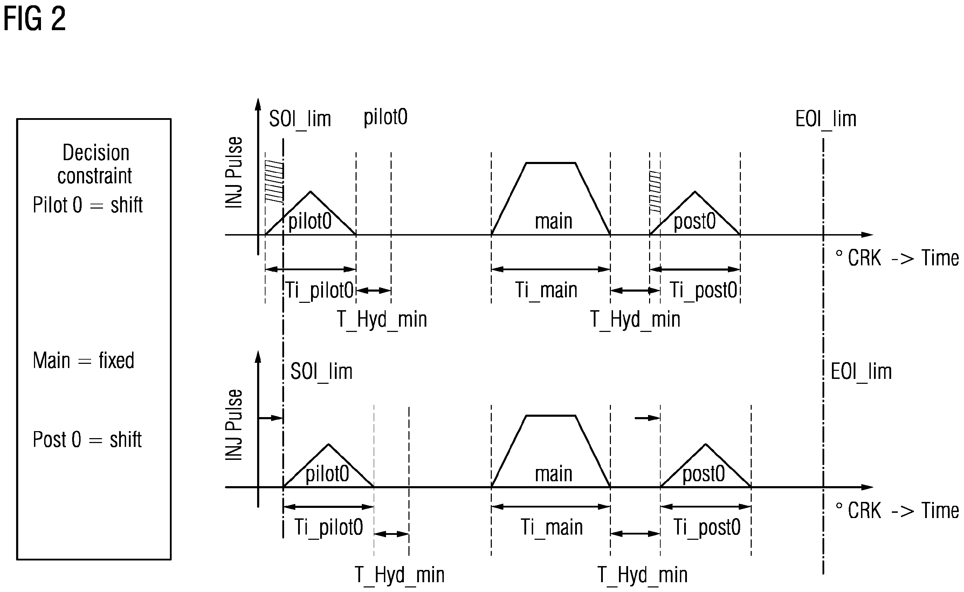

Figure 2 shows a first scenario with regard to realizing the inventive method. The injection window is limited by SOI_lim and EOI_lim. There are one pilot pulse, one main pulse and one post pulse within the window. The minimal hydraulic separation (distance) is characterized by T_Hyd_min.

In this case pilot 0 is shifted to the right because it is outside the injection window and it is enough space until SOI of main pulse. Post pulse is shifted to the right to keep minimal hydraulic separation. TIs are recalculated based on new pressure wave estimation.

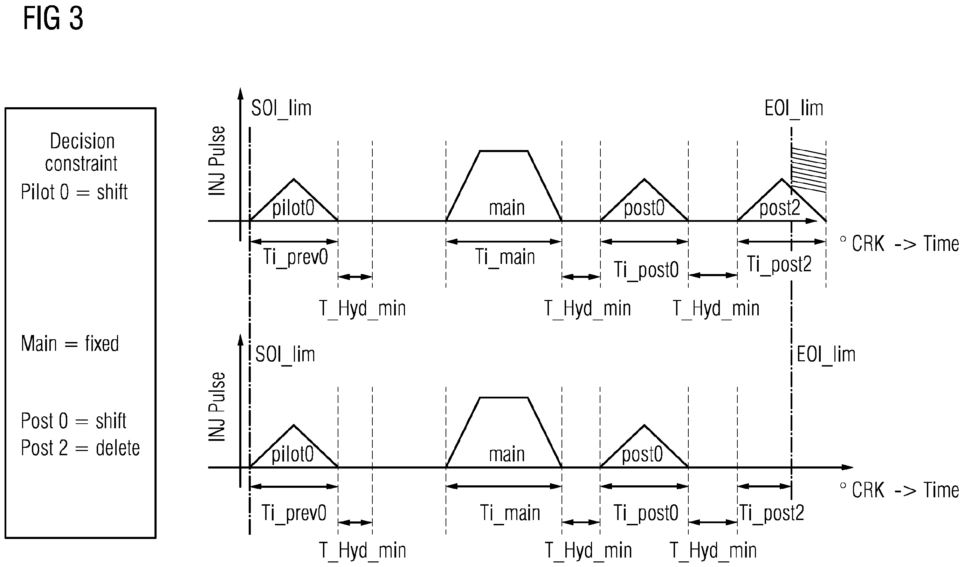

According to the scenario shown in figure 3 pulse 2 needs to be shifted to the left because it is outside the injection window. Due to a lack of space even if the decision constraint allows shifting pulse 2, the SOI cannot be shifted more to the left, so the pulse is deleted. TI is recalculated based on new pressure wave estimation.

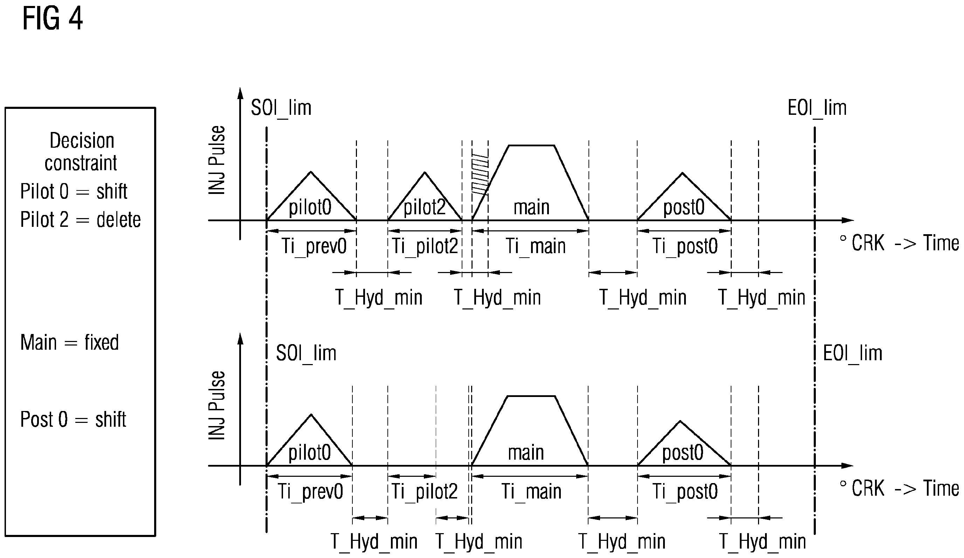

In the scenario of figure 4 pilot 2 should be moved because min hydraulic separation with main injection is violated. Due to decision constraint, pilot 2 cannot be shifted so the pulse is deleted. TI is recalculated based on new pressure wave estimation.

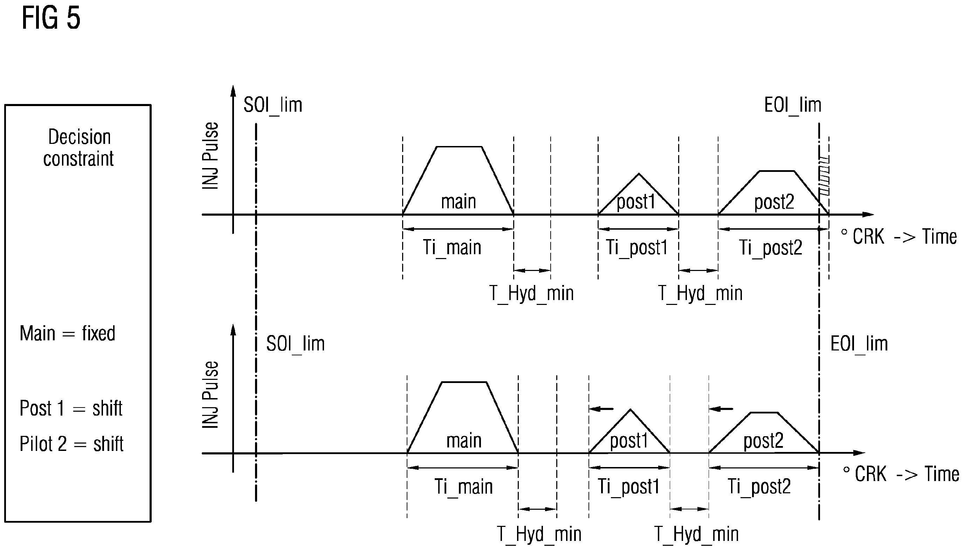

In the scenario of figure 5 post 2 needs to be shifted to the left because it is outside the injection window but there is not enough space. Post 1 can be shifted to the left because it is enough space to keep minimal hydraulic separation. With this shift post 2 can be executed completely. TIs are recalculated based on new pressure wave estimation.

## Claims

1. A method of operating an injection system of a motor vehicle, said method comprising the following steps:
determining the angular start (SOI) and duration (TI) of several injection pulses within an injection window;
carrying out corrections with the determined values by a collision management (CM) rule based mechanism upon conflicts between the injections pulses by shifting and/or removing pulses;
when doing this, evaluating at every step the applied angular start of injection (SOI) corrections for each pulse with respect to pressure wave influences upon following injection pulses within the injection window; and
recalculating the duration (TI) for following injection pulses on the basis of this evaluation, in order for the injection system to deliver the requested fuel mass for each injection pulse,
wherein the carried out evaluation consists of comparing the applied angular start of injection (SOI) corrections with a minimal threshold above which a carried out correction has a hydraulic influence on following injection pulses and recalculating the duration (TI) for following injection pulses if the result of the comparison lies above the threshold.

2. The method according to claim 1, **characterized in that** the recalculation of start (SOI) and duration (TI) is based on an iterative calculation method.

3. The method according to one of the preceding claims, **characterized by** calculating the electrical injection pulse durations from the determined hydraulic injection pulse durations (TI).

4. The method according to one of the preceding claims, **characterized in that** the corrections regarding the angular start of injection (SOI) and/or the injection pulse durations (TI) are carried out to satisfy the constraints regarding minimum hydraulic separation (distance) between injection pulses and fitting of the injection pulses inside the injection windows.

5. The method according to one of the preceding claims, **characterized in that** the several injection pulses are pulses of at least one pilot injection, main injection and/or post injection.

6. An injection system of a motor vehicle comprising an electronic control unit configured to carry out the method according to one of the preceding claims.

## Patentansprüche

1. Verfahren zum Betrieb eines Einspritzsystems eines Kraftfahrzeugs, wobei das Verfahren die folgenden Schritte aufweist:
Bestimmen des Beginnwinkels (SOI) und der Dauer (TI) mehrerer Einspritzimpulse in einem Einspritzfenster;
Ausführen von Korrekturen mit den bestimmten Werten durch einen regelbasierten Mechanismus mit Kollisionsmanagement (Collision Management, CM) bei Konflikten zwischen den Einspritzimpulsen durch Verschieben und/oder Entfernen von Impulsen;
dabei bei jedem Schritt Bewerten der angewendeten Korrekturen des Einspritzbeginnwinkels (SOI) für jeden
Impuls hinsichtlich Druckwelleneinflüssen auf folgende Einspritzimpulse innerhalb des Einspritzfensters; und
Neuberechnung der Dauer (TI) für die folgenden Einspritzimpulse auf der Grundlage dieser Bewertung, damit das Einspritzsystem für jeden Einspritzimpuls die angeforderte Kraftstoffmasse liefert,
wobei die ausgeführte Bewertung darin besteht, die angewandten Korrekturen des Einspritzbeginnwinkels (SOI) mit einem minimalen Schwellenwert zu vergleichen, oberhalb dessen eine durchgeführte Korrektur einen hydraulischen Einfluss auf nachfolgende Einspritzimpulse hat, und die Dauer (TI) für nachfolgende Einspritzimpulse neu zu berechnen, wenn das Ergebnis des Vergleichs über dem Schwellenwert liegt.

2. Verfahren nach Anspruch 1, **dadurch gekennzeichnet, dass** die Neuberechnung von Start (SOI) und Dauer (TI) auf einem iterativen Berechnungsverfahren basiert.

3. Verfahren nach einem der vorangehenden Ansprüche, **gekennzeichnet durch** Berechnen der elektrischen Einspritzimpulsdauern aus den bestimmten hydraulischen Einspritzimpulsdauern (TI).

4. Verfahren nach einem der vorangehenden Ansprüche, **dadurch gekennzeichnet, dass** die Korrekturen bezüglich des Einspritzbeginnwinkels (SOI) und/oder der Einspritzimpulsdauern (TI) zur Einhaltung der Einschränkungen hinsichtlich der minimalen hydraulischen Trennung (Abstand) zwischen Einspritzimpulsen und Anpassung der Einspritzimpulse innerhalb der Einspritzfenster durchgeführt werden.

5. Verfahren nach einem der vorangehenden Ansprüche,
**dadurch gekennzeichnet, dass** die mehreren Einspritzimpulse Impulse von mindestens einer Voreinspritzung, Haupteinspritzung und/oder Nacheinspritzung sind.

6. Einspritzsystem eines Kraftfahrzeugs, aufweisend eine elektronische Steuereinheit, ausgebildet zur Ausführung des Verfahrens nach einem der vorangehenden Ansprüche.

## Revendications

1. Procédé de fonctionnement d'un système d'injection d'un véhicule automobile, ledit procédé comprenant les étapes consistant à :
déterminer le démarrage angulaire (SOI) et la durée (TI) de plusieurs impulsions d'injection dans une fenêtre d'injection ;
effectuer des corrections avec les valeurs déterminées par un mécanisme basé sur des règles de gestion des collisions (CM) en cas de conflit entre les impulsions d'injection en décalant et/ou en supprimant des impulsions ;
ce faisant, évaluer à chaque étape les corrections de démarrage angulaire de l'injection (SOI) appliquées pour chaque impulsion par rapport aux influences d'onde de pression sur les impulsions d'injection suivantes dans la fenêtre d'injection ; et
recalculer la durée (TI) pour les impulsions d'injection suivantes sur la base de cette évaluation, afin que le système d'injection délivre la masse de carburant demandée pour chaque impulsion d'injection,
l'évaluation effectuée consistant à comparer les corrections de démarrage angulaire d'injection (SOI) appliquées à un seuil minimal au-dessus duquel une correction effectuée a une influence hydraulique sur les impulsions d'injection suivantes et à recalculer la durée (TI) pour les impulsions d'injection suivantes si le résultat de la comparaison est supérieur au seuil.

2. Procédé selon la revendication 1, **caractérisé en ce que** le recalcul du début (SOI) et de la durée (TI) est basé sur un procédé de calcul itératif.

3. Procédé selon l'une des revendications précédentes, **caractérisé par** le calcul des durées d'impulsion d'injection électrique à partir des durées d'impulsion d'injection hydraulique (TI) déterminées.

4. Procédé selon l'une des revendications précédentes, **caractérisé en ce que** les corrections concernant le démarrage angulaire d'injection (SOI) et/ou les durées d'impulsion d'injection (TI) sont effectuées pour satisfaire aux contraintes concernant la séparation hydraulique minimale (distance) entre les impulsions d'injection et l'insertion des impulsions d'injection dans les fenêtres d'injection.

5. Procédé selon l'une des revendications précédentes, **caractérisé en ce que** les différentes impulsions d'injection sont des impulsions d'une injection pilote, d'une injection principale et/ou d'une post-injection.

6. Système d'injection d'un véhicule automobile comprenant une unité de commande électronique conçue pour effectuer le procédé selon l'une des revendications précédentes.
